# EUROPÄISCHE PATENTSCHRIFT

(11) **EP 1 334 815 B1**
(45) Veröffentlichungstag und Bekanntmachung des Hinweises auf die Patenterteilung: **15.09.2004**
(21) Anmeldenummer: 03002760.1
(22) Anmeldetag: 06.02.2003
(51) Int. Cl.: B29C 47/22

(54) **Vorrichtung zum Extrudieren von Kunststoffrohren mittels Düse mit niedriger Reibung**
Apparatus for extruding plastic tubes with low friction nozzle
Buse annulaire à faible coefficient de friction pour l'extrusion de tubes en plastique

(30) Priorität: 08.02.2002 DE 10205210
(43) Veröffentlichungstag der Anmeldung: 13.08.2003
(73) Patentinhaber: Egeplast Werner Strumann GmbH & Co. KG, 48268 Greven (DE); Krauss-Maffei Kunststofftechnik GmbH, 80997 München (DE)
(72) Erfinder: Herbert, Ulrich, 48282 Münster (DE)
(74) Vertreter: Habbel, Hans-Georg, Dipl.-Ing.

(56) Entgegenhaltungen:
- US-A- 3 111 714
- US-A- 3 649 148
- US-A- 4 124 351
- PATENT ABSTRACTS OF JAPAN vol. 010, no. 136 (C-347), 20. Mai 1986 (1986-05-20) -& JP 60 259175 A (IKEGAI TEKKO KK;OTHERS: 01), 21. Dezember 1985 (1985-12-21) -& DATABASE WPI Week 198606 Derwent Publications Ltd., London, GB; AN 1986-039140 XP002237494 & JP 60 259175 A

## Beschreibung

Die Erfindung bezieht sich auf eine Vorrichtung zur Herstellung von Kunststoffrohren im Extrusionsverfahren gemäß dem Oberbegriff des Hauptanspruches.

Eine gattungsbildende Einrichtung ist beispielsweise aus der US-A 44 22 839 bekannt.

Derartige Einrichtungen werden in Blasformanlagen zur Herstellung von blasgeformten Hohlkörpern aus thermoplastischem Kunststoff, wie z. B. Flaschen, Kanister oder großvolumigen Fässern eingesetzt. Der Düsenspalt wird dadurch gleichmäßig verändert, dass der Düsenkern innerhalb des Düsenmantels axial verstellbar ist, um dadurch dem Vorformling über seine Länge eine dickere oder dünnere Wandstärke zu geben. Weiterhin ist es bekannt, eine partielle Wanddickenreglung, d. h. unterschiedliche Wandstärken in Umfangsrichtung gesehen, des Vorformlinges zu erreichen.

Aus der DE 198 43 341 ist eine Vorrichtung bekannt, um während der Produktionsphase eines Rohres ohne Unterbrechung des Produktionsganges eine vollautomatisch gesteuerte Umstellung zwischen mehreren Kunststoffrohrdimensionen im kontinuierlichen Extrusionsprozeß zu erreichen, wobei der Außendurchmesser und die Rohrwanddicke entsprechend den Kundenwünschen bzw der Normung aufeinander abgestimmt sind.

Um diese Abstimmung zu erreichen, ist es erforderlich, dass innerhalb des Rohrkopfes, und zwar im Ausgangsbereich des Rohrkopfes, der Massespalt und der Außendurchmesser des den Rohrkopf verlassenden Kunststoffschmelzestranges verstellt werden kann, d. h. das Dornende wird in dem Raum des Düsenmantels vor- und zurückgezogen und hier wird eine definierte Abrisskante des Schmelzestranges innerhalb des Düsenmantels angestrebt.

Der Erfindung liegt die Aufgabe zugrunde, den Bereich des Rohrkopfes so zu gestalten, dass es möglich ist, diese definierte Abrisskante zu erreichen.

Diese der Erfindung zugrundeliegende Aufgabe wird durch die Lehre des Hauptanspruches gelöst.

Vorteilhafte Ausgestaltungen sind in den Unteransprüchen erläutert.

Aus der DE 698 03 702 T2 sind Extrusionsdüsen bekannt, deren mit der Schmelze in Berührung kommende Oberfläche zur Verbesserung der Gleitfähigkeit und Ablösbarkeit der Schmelze vernickelt sind. Diese Literaturstelle legt aber nicht nahe, im Dornhalterwerkzeug Teilbereiche des Dornes und des Düsenmantels aus einem Werkstoff auszuführen, der eine bessere Gleitfähigkeit aufweist als der im Schmelzekanal verwendete Werkstoff.

In der US 3 649 148 A wird eine Vorrichtung zur Extrusion von thermoplastischem Halbzeug beschrieben, das nachfolgend in einer Blasformanlage zu einem entsprechenden Artikel, beispielsweise einer Flasche oder dergleichen, umgeformt werden soll.

Diese Vorrichtung weist einen hohlen Innendorn auf, der wiederholbare und bestimmbare elastische Eigenschaften aufweisen soll, wobei als Werkstoff Titan vorgeschlagen wird. Der Innendorn kann über einen hydraulisch betriebenen Stempel mehr oder weniger weit in einem Düsenmantel verstellt werden, so dass dadurch der Austrittsspalt zwischen der Außenseite des Innendorns und der Innenseite des Düsenmantels in geringen Ausmaßen vergrößert oder verkleinert werden kann. Hierdurch sind unterschiedliche Wandstärken des Rohlings oder des Halbzeuges herstellbar.

Unabhängig von der Weite des Austrittsspaltes zwischen der Außenseite des Innendornes und der Innenseite des Düsenmantels ist die sogenannte Abrisskante immer am unteren Ende des Spaltes, der durch den Düsenmantel bestimmt wird. Die Abrisskante liegt also niemals höher in dem Raum, der zwischen der Außenseite des Innendornes und der Außenseite des Düsenmantels bestimmt wird.

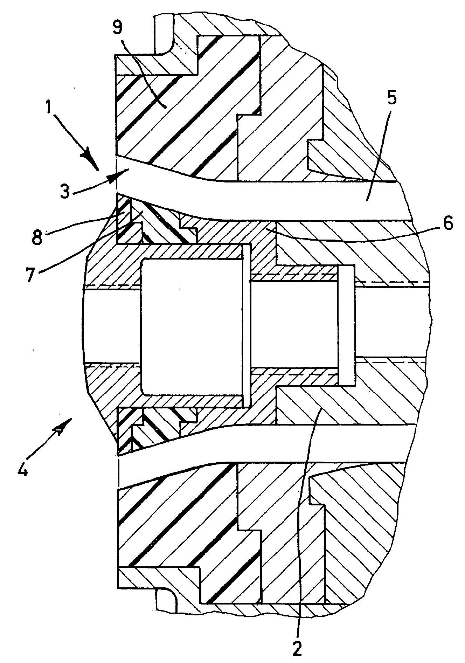

In der US 3 649 148 wird weiterhin ausgeführt, dass das Werkzeug, das insbesondere in Fig. 1 dargestellt ist, aus Stahl oder anderem Werkstoff hergestellt werden kann, wobei dieser Werkstoff die erforderliche Festigkeit aufweisen muss. Vorzugsweise sollen die inneren Oberflächen dieses Werkzeuges chrombeschichtet sein, um damit ein mögliches Anhaften des durch die Kanäle fließenden Kunststoffes zu vermeiden. Hier wird somit darauf hingewiesen, dass auch die Außenseite des Innendornes - und das heißt auch die Innenseite des Düsenmantels - insgesamt aus chrombeschichtetem Werkstoff bestehen sollen; es wird also nicht vorgeschlagen, dass die Außenfläche des Innendornes und die Innenfläche des Düsenmantels aus mindestens einem Werkstoff bestehen soll, der eine höhere Gleitfähigkeit aufweist als der Werkstoff, der die Außen- und Innenfläche des Schmelzekanals am extruderseitigen Beginn der Vorrichtung bildet.

Mit anderen Worten ausgedrückt, wird gemäß der Erfindung vorgeschlagen, dass die Außenfläche des Dornendes und die Innenfläche des Düsenmantels aus mindestens einem Werkstoff bestehen, der eine höhere Gleitfähigkeit aufweist als der Werkstoff, der die Außen- und Innenfläche des Schmelzekanales am extruderseitigen Beginn des Rohrkopfes bildet.

Besonders vorteilhaft ist es dabei, dass die Gleitfähigkeit auf der Außenfläche des Dornendes in Produktionsrichtung des Schmelzestranges gesehen zum Abrißende hin zunimmt, d. h. also, das Dornende weist in Richtung des Produktionsflusses gesehen unterschiedliche Gleitfähigkeiten auf, besteht also aus unterschiedlichen Werkstoffen oder Werkstoffzusammensetzungen.

Demgegenüber ist aber die Gleitfähigkeit auf der Innenfläche des Düsenmantels auf der ganzen Länge des konischen Bereiches gleich.

Gemäß einer bevorzugten Ausführungsform wird dabei so vorgegangen, dass das eigentliche Dornende in Produktionsrichtung gesehen zuerst aus einem Stahlwerkstoff besteht, wie er auch im eigentlichen Schmelzekanal eingesetzt wird. Hieran schließt sich dann ein Werkstoff an, der eine höhere Gleitfähigkeit als der vorgenannte Stahlwerkstoff aufweist, wobei sich an diesen Bereich wiederum ein Bereich anschließt, der eine noch höhere Gleitfähigkeit als der vorhergehende Bereich aufweist.

Vorzugsweise ist dabei die Gleitfähigkeit dieses Endbereiches des eigentlichen Dornendes genauso hoch wie die Gleitfähigkeit des Werkstoffes, durch den die Innenfläche des Düsenmantels gebildet wird.

Während in Produktionsrichtung gesehen der Werkstoff zu Beginn des Dornendes aus dem selben Material besteht wie der Werkstoff des eigentlichen Schmelzekanales, bestehen die eine höhere Gleitfähigkeit aufweisenden Werkstoffe vorzugsweise aus einem Kunststoff und hier vorzugsweise aus Polytetrafluoräthylen, so wie er beispielsweise unter dem Handelsnamen "Teflon" bekannt ist.

Während der Stahlwerkstoff sowohl im Schmelzekanal, wie auch zu Beginn des Dornendes eine solche Gleitfähigkeit aufweist, dass eine sichere Führung des Kunststoffes des Schmelzestranges erreicht wird, bewirken die eine höhere Gleitfähigkeit aufweisenden Werkstoffe, beispielsweise Polytetrafluoräthylen, eine solch sichere Führung nicht, sondern hier ist ein leichtes Ablösen der Kunststoffschmelze möglich. Dieser Ansicht nach nachteilige Eigenschaften des Polytetrafluoräthylens wird also in vorteilhafter Weise bei dem Vorschlag gemäß der Erfindung ausgenutzt.

Ein Ausführungsbeispiel der Erfindung wird nachfolgend anhand der Zeichnung erläutert.

In der Zeichnung ist ein Dornkopf 1 dargestellt mit einem Dornende 4, das innerhalb eines Düsenmantels 3 verstellbar angeordnet ist. Das Dornende 4 wird von einem Dornhalter 2 getragen, der innerhalb eines Schmelzekanales 5 angeordnet ist.

Der die Innen- und Außenfläche des Schmelzekanales 5 bildende Werkstoff ist ein im Extruderbereich bekannter Stahlwerkstoff, d. h. hier können Stahllegierungen eingesetzt werden, wie sie zum Stand der Technik gehören.

Das Dornende 4 und der Düsenmantel 3 sind beide konisch ausgebildet, so wie dies im Stand der Technik an sich bekannt ist.

Die Außenfläche des konischen Bereiches 9 des Düsenmantels 3 wird durch einen Werkstoff gebildet, der eine hohe Gleitfähigkeit aufweist und beispielsweise durch Kunststoff gebildet wird, wobei sich hier insbesondere ein Polytetrafluoräthylen anbietet.

Das sich ebenfalls konisch erweiternde Dornende 3 besteht aus einer Aufeinanderfolge unterschiedlicher Werkstoffe. Der in Produktionsrichtung gesehen sich an den Schmelzekanal 5 anschließende Bereich 6 des Dornendes 4 besteht aus einem Stahlwerkstoff, vorzugsweise dem gleichen, der die Außen- und Innenfläche des Schmelzekanales 5 bildet.

Der sich in Produktionsrichtung an diesen Bereich 6 anschließende Bereich 7 besteht aus einem Werkstoff, der eine höhere Gleitfähigkeit aufweist als der Werkstoff, aus dem der Bereich 6 besteht, und hier wird vorzugsweise ein Kunststoff eingesetzt, der beispielsweise durch ein stumpfes Polytetrafluoräthylen gebildet wird.

Zum Ende des Dornendes 4 hin besteht der Bereich 8 aus einem eine hohe Gleitfähigkeit aufweisenden Kunststoffes, beispielsweise ebenfalls wieder aus einem Polytetrafluoräthylen, das auch für den Bereich 9 des Düsenmantels 3 eingesetzt wird.

Durch dieses Zusammenspiel der unterschiedliche Gleitfähigkeit aufweisenden Werkstoffe in Verbindung mit dem in axialer Richtung verstellbaren Dornende, wird bewirkt, dass eine definierte Abrisskante des Schmelzestranges im sich konisch erweiternden Düsenmantelbereich möglich wird, so dass dadurch nicht nur die Wandstärke des austretenden Kunststoffrohres bestimmt werden kann, sondern auch der Außenumfang. Dies war bei den beispielsweise aus der US-PS 44 22 839 bekannten Vorrichtungen, die für Blasformanlagen eingesetzt wird, weder notwendig noch möglich.

## Patentansprüche

1. Vorrichtung zur Herstellung von Kunststoffrohren im Extrusionsverfahren mit einem Extruder, einem sich in Produktionsrichtung an den Extruder anschließenden, einen Dornhalter (2) in einem Düsenmantel (3) aufweisenden Rohrkopf (1), wobei das Dornende (4) des Dornhalters (2) in Produktionsrichtung gesehen konisch ausgebildet ist und der das Dornende (4) umgebende und einen Massespalt mit dem Dornende (4) ausbildenden Düsenmantel (3) ebenfalls konisch ausgebildet ist, und das Dornende (4) in Produktionsrichtung innerhalb des Düsenmantels (3) vor und zurück verstellbar ist, **dadurch gekennzeichnet, dass** die Außenfläche des Dornendes (4) und die Innenfläche des Düsenmantels (3) aus mindestens einem Werkstoff bestehen, der eine höhere Gleitfähigkeit aufweist als der Werkstoff, der die Außen- und Innenfläche des Schmelzekanales (5) am extruderseitigen Beginn des Rohrkopfes (1) bildet.

2. Vorrichtung nach Anspruch 1, wobei die Gleitfähigkeit auf der Außenfläche des Dornendes (4) in Produktionsrichtung des Schmelzestranges gesehen zum Abrißende zunimmt.

3. Vorrichtung nach Anspruch 1 oder 2, wobei die Gleitfähigkeit auf der Innenfläche des Düsenmantels (3) auf der ganzen Länge des konischen Bereiches (9) gleich ist.

4. Vorrichtung nach Anspruch 2, wobei in Produktionsrichtung gesehen der Bereich (6) der Außenfläche des Anfanges des konischen Dornendes (4) aus einem Stahlwerkstoff besteht.

5. Vorrichtung nach Anspruch 2 oder 4, wobei in Produktionsrichtung gesehen die Außenfläche des sich an den aus Stahlwerkstoff bestehenden Bereich (6) anschließenden Bereiches (7) aus einem Werkstoff besteht, der eine höhere Gleitfähigkeit aufweist als der Stahlwerkstoff.

6. Vorrichtung nach Anspruch 2, 4 oder 5, wobei in Produktionsrichtung gesehen die Außenfläche des Endbereiches (8) des Dornendes (4) aus einem Werkstoff besteht,der eine höhere Gleitfähigkeit als der vorhergehende Bereich (7) des Dornendes aufweist.

7. Vorrichtung nach einem der vorhergehenden Ansprüche, wobei die Gleitfähigkeit des äußeren Endbereiches (8) des Dornendes (4) die gleiche ist wie die Gleitfähigkeit des Werkstoffes, der den Bereich (9) der Innenfläche des Düsenmantels (3) bildet.

## Claims

1. Device for manufacturing plastic tubes by the extrusion method with an extruder, a tube tip (1) following the extruder in the direction of production, and incorporating a mandrel holder (2) in a nozzle jacket (3), where the mandrel end (4) of the mandrel holder (2) viewed in the direction of production is designed tapered and the nozzle jacket surrounding the mandrel end (4) and forming a mass slit with the mandrel end is likewise designed tapered, and the mandrel end (4) in the direction of production can be displaced forward and backward inside the nozzle jacket (3), **characterised in that** the outer surface of the mandrel end (4) and the inner surface of the nozzle jacket (3) is made of at least one material which has higher sliding capacity than the material forming the outer and inner surface of the melt channel (5) at the extruder-side start of the tube tip (1).

2. Device in accordance with claim 1, where the sliding capacity on the outer surface of the mandrel end (4) viewed in the direction of production of the melt strand increases towards the tear-off end.

3. Device in accordance with claim 1 or 2, where the sliding capacity on the inner surface of the nozzle jacket (3) is identical over the entire length of the tapering area (9).

4. Device in accordance with claim 2, where viewed in the direction of production the area (6) of the outer surface of the beginning of the tapering mandrel end (4 is made of a steel material.

5. Device in accordance with claim 2 or 4, where viewed in the direction of production the outer surface of the area (7) following the area (6) consisting of a steel material is made of a material which demonstrates a higher sliding capacity than the steel material.

6. Device in accordance with claim 2, 4 or 5, where viewed in the direction of production the outer surface of the end area (8) of the mandrel end (4) is made of a material which demonstrates a higher sliding capacity than the preceding area (7) of the mandrel end.

7. Device in accordance with one of the foregoing claims, where the sliding capacity of the outer end area (8) of the mandrel end (4) is the same as the sliding capacity of the material which forms the area (9) of the inner surface of the nozzle jacket (3).

## Revendications

1. Dispositif servant à fabriquer des tubes en plastique par le procédé d'extrusion, à l'aide d'une extrudeuse, d'une tête (1) à tube située - lorsque observée dans le sens de la production - dans le prolongement de l'extrudeuse et présentant un support (2) de pointe dans une enveloppe (3) de buse, sachant que l'extrémité (4) du support (2) de pointe est de forme conique lorsque observée dans le sens de la production, et que l'enveloppe de buse (3) - entourant l'extrémité (4) de la pointe et formant un interstice à pâte avec cette extrémité de pointe (4) - présente elle aussi une géométrie conique, et sachant que l'extrémité de pointe (4) se laisse, observée dans le sens de la production, régler en avant et en arrière à l'intérieur de l'enveloppe (3) de buse ; **caractérisé en ce que** la surface extérieure de l'extrémité (4) de pointe et la surface intérieure de l'enveloppe (3) de buse se composent au moins d'un matériau présentant une faculté de glissement supérieure à celle du matériau qui forme la surface extérieure et intérieure du canal de fusion (5) au commencement, côté extrudeuse, de la tête (1) à tube.

2. Dispositif selon la revendication 1, sachant que la faculté de glissement sur la surface extérieure de l'extrémité de la pointe (4), observée dans le sens de production du boudin fusible, augmente en direction de son extrémité d'arrachage.

3. Dispositif selon la revendication 1 ou 2, sachant que la faculté de glissement sur la surface intérieure de l'enveloppe de buse (3) est identique sur toute la longueur de la zone conique (9).

4. Dispositif selon la revendication 2, sachant que, observée dans le sens de la production, la zone (6) formée par la surface extérieure du commencement de l'extrémité conique (4) de la pointe a été réalisée dans un matériau acier.

5. Dispositif selon la revendication 2 ou 4, sachant que, observée dans le sens de la production, la surface extérieure de la zone (7) jouxtant la zone (6) réalisée dans un matériau acier, se compose elle-même d'un matériau présentant une plus haute faculté de glissement que le matériau acier.

6. Dispositif selon la revendication 2, 4 ou 5, sachant que, observée dans le sens de la production, la surface extérieure de la zone terminale (8) de l'extrémité (4) de la pointe a été réalisée dans un matériau présentant une plus haute faculté de glissement que la zone (7), précédant ladite zone terminale, à l'extrémité de la pointe.

7. Dispositif selon l'une des revendications précédentes, sachant que la faculté de glissement de la zone terminale (8) extérieure située à l'extrémité de la pointe (4) est identique à la faculté de glissement du matériau formant la zone (9) de la surface intérieure de l'enveloppe (3) de buse.
